# FASCICULE DE BREVET EUROPEEN

(11) **EP 1 852 312 B1**
(45) Date de publication et mention de la délivrance du brevet: **05.09.2012**
(21) Numéro de dépôt: 07107371.2
(22) Date de dépôt: 02.05.2007
(51) Int. Cl.: B60R 7/00, B62D 25/06, B60R 7/04

(54) **Système d'aménagement de véhicule automobile à longeron central intérieur et véhicule automobile correspondant.**
System zur Ausrüstung eines Kraftfahrzeugs mit einem inneren Mittellängsträger und entsprechendes Kraftfahrzeug.
System of providing an automobile with an inner centre beam and corresponding automobile.

(30) Priorité: 02.05.2006 FR 0603917; 27.07.2006 FR 0606896
(43) Date de publication de la demande: 07.11.2007
(73) Titulaire: Advanced Comfort Systems France SAS - ACS France, 79300 Bressuire (FR)
(72) Inventeur: Fourel, Pascal, 35400, SAINT MALO (FR); Sandrin, Xavier, 79300, BRESSUIRE (FR)
(74) Mandataire: Bioret, Ludovic

(56) Documents cités:
- DE-A1-102004 005 482
- GB-A- 2 398 769
- US-A- 6 065 793
- US-A1- 2004 124 654
- US-A1- 2005 258 663

## Description

Le domaine de l'invention est celui de l'aménagement intérieur des véhicules automobiles, et de l'optimisation de la mise en oeuvre de certains équipements à l'intérieur de ces véhicules.

Plus précisément, l'invention concerne une approche nouvelle de la mise en oeuvre d'équipements intérieurs au voisinage du pavillon du véhicule.

Les pavillons, et notamment les pavillons vitrés, en totalité ou en partie, sont généralement équipés de moyens d'occultation, tels que des stores montés sur enrouleur, ou des palettes pare-soleil.

Le titulaire de la présente demande de brevet a proposé de nombreuses techniques dans ce sens, visant à optimiser l'occultation, la rendre modulaire, adapter le galbe d'un store à celui du pavillon... Cependant, la mise en oeuvre d'une toile de grande largeur (pour occulter toute la largeur d'un pavillon) reste assez difficile.

Par ailleurs, il est souvent requis d'équiper le pavillon d'autres éléments, tels que des consoles, permettant le stockage d'objets, ou encore de moyens d'éclairage, nécessitant une alimentation électrique. Cette alimentation est souvent problématique, notamment en présence d'un pavillon vitré, qui rend difficile l'escamotage de ses câbles.

Le document US-2004/124654 décrit un système de rangement pour la partie supérieure de l'intérieur d'un véhicule automobile selon le préambule de la revendication 1. Un tel système comprend un module rotatif avec des espaces de rangement et des appareils alimentés électriquement.

Le document US-6 065 793 porte sur une baie vitrée de pavillon de véhicule automobile équipée d'un panneau vitré coulissant, portant une console centrale.

L'invention a notamment pour objectif de pallier ces inconvénients de l'état de l'art.

Plus précisément, un objectif de l'invention est de fournir une technique permettant d'optimiser et de simplifier l'aménagement intérieur des véhicules automobiles, au voisinage du pavillon, en particulier lorsque celui-ci est au moins en partie vitré.

Ainsi, un objectif particulier de l'invention est de fournir une technique permettant d'assurer de façon simple et efficace la mise en oeuvre de moyens d'occultation.

Un autre objectif de l'invention est encore de fournir une telle technique, selon au moins certains modes de réalisation particuliers, qui permettent la mise en oeuvre d'équipements mobiles, amovibles, et/ou alimentés par des signaux électriques.

Un autre objectif de l'invention est de fournir une telle technique, qui soit simple et peu coûteuse à mettre en oeuvre.

L'invention a également pour objectif de fournir une telle technique aisément intégrable, de façon ergonomique, dans un véhicule.

Ces objectifs, ainsi que d'autres qui apparaîtront plus clairement par la suite, sont atteints selon l'invention à l'aide d'un système d'aménagement de véhicule automobile selon la revendication 1.

On peut ainsi fournir une protection latérale, aussi bien aux passagers avant qu'aux passagers arrière.

On dispose ainsi de moyens simples et efficaces, permettant d'apporter de nombreuses applications dans l'habitacle du véhicule. Cette approche permet également de développer de nouveaux designs et de nouvelles fonctions, avec une complexité réduite.

Selon l'invention, lesdits premiers rails de côté permettent chacun le guidage d'au moins un élément d'occultation.

Dans ce cas, avantageusement, lesdits premiers rails de côté coopèrent chacun avec un rail latéral, s'étendant au voisinage d'un bord dudit pavillon, de façon à guider et/ou maintenir au moins une barre de tirage et/ou au moins une baleine et/ou au moins une toile d'occultation.

Selon une caractéristique avantageuse de l'invention, ledit longeron central assure le guidage et le maintien d'une barre de tirage et/ou d'au moins une baleine, par une zone de suspension s'étendant au milieu de ladite barre de tirage ou de la ou desdites baleines.

Cette approche permet notamment de déployer et de maintenir au plus près du pavillon la ou les toiles d'occultation.

Préférentiellement, ladite zone de suspension comprend deux portions d'appui coopérant respectivement avec lesdits rails de côté.

La barre de tirage est ainsi efficacement maintenue et guidée le long du longeron central.

Selon une caractéristique préférentielle de l'invention, lorsqu'au moins une toile d'occultation est prévue, ledit longeron porte au moins une baleine de maintien de cette toile d'occultation.

Avantageusement, dans ce cas, chacune desdites baleines est articulée par rapport audit longeron et mobile entre deux positions :
- une position de repos, dans laquelle elle s'étend sensiblement parallèlement audit longeron ;
- une position de maintien de toile, dans laquelle elle s'étend sensiblement perpendiculairement audit longeron.

On obtient ainsi un système de baleines efficace et discret, selon lequel les baleines ne sont pas liées à la toile, et n'augmentent donc pas le volume de celle-ci, lorsqu'elle est enroulée. On évite également le marquage de la toile par les baleines.

Selon une autre mise en oeuvre avantageuse de l'invention, ledit longeron présente un espace avec ledit pavillon, permettant le passage et le maintien d'une toile d'occultation s'étendant sensiblement sur toute la largeur dudit pavillon.

Cette approche permet, de façon simple, de maintenir la toile, en s'affranchissant de baleines, ou au moins en réduisant leur nombre et/ou leur taille.

Selon un autre mode de réalisation préférentiel, ledit rail central coopère avec une toile d'occultation portant au moins un élément de maintien et/ou de guidage éloigné des bords latéraux de ladite toile et s'étendant parallèlement audit axe de déploiement, la section dudit rail central étant complémentaire de celle dudit élément de maintien et/ou de guidage.

De façon avantageuse, ledit rail central et/ou lesdits rails de côté assure le guidage et/ou le maintien d'une barre de tirage, par une partie centrale de cette dernière.

La toile est ainsi correctement maintenue et facilement guidée le long du longeron central. Cette approche permet de déployer la toile au plus près du pavillon et de lui imprimer les galbes qu'il est susceptible de présenter.

Selon une caractéristique avantageuse de l'invention, ledit longeron comprend des moyens de distribution et/ou de guidage d'un flux d'air.

De façon préférentielle, le longeron présente au moins une cavité d'écoulement d'un fluide comme de l'air de ventilation.

Il est ainsi possible d'acheminer de l'air de ventilation en différents points d'un habitacle et d'améliorer le confort des occupants.

Avantageusement, lesdits moyens de distribution et/ou de guidage d'un flux d'air sont alimentés par au moins une ouverture prévue à cet effet dans ledit pavillon.

L'air de ventilation peut ainsi être aisément puisée directement à l'extérieur du véhicule sans nécessairement passer par le circuit de ventilation classique.

Selon un autre aspect de l'invention, ledit longeron comprend au moins un passage de câble, permettant l'actionnement et/ou l'alimentation électrique d'au moins un dispositif porté par ledit longeron.

En effet, le longeron central permet de faire circuler de façon discrète différents éléments, et par exemple un câble d'entraînement de la barre de tirage, qui peut ainsi agir de façon centrale, ou une alimentation électrique, ou encore des signaux électriques.

Avantageusement, ladite alimentation électrique alimente des moyens d'éclairage montés dans au moins un des éléments appartenant au groupe comprenant :
- ledit longeron ;
- une toile d'occultation ;
- une barre de tirage ;
- une baleine ;
- un élément d'habillage.

Selon un aspect avantageux de l'invention, la face dudit longeron orientée vers le haut dudit véhicule automobile comprend au moins une zone fonctionnelle.

Préférentiellement, au moins une desdites zones fonctionnelles comprend :
- une surface de guidage et/ou de support d'une toile d'occultation ;
- une surface ou un logement de guidage et/ou de support d'une barre de tirage et/ou d'au moins une baleine ;
- un logement d'au moins un câble d'actionnement et/ou d'au moins un câble électrique ;
- une zone de diffusion de lumière ;
- un logement de moyens d'éclairage;
- un logement de moyens de diffusion d'un flux d'air.

Ainsi, la face supérieure du longeron peut permettre la réalisation de diverses fonctions. Une goulotte peut par exemple être ménagée sur la face supérieure du longeron de façon à permettre le passage de câbles, de fil. Des logements peuvent également être ménagés sur la face supérieure du longeron de façon à y introduire des systèmes de diffusion de lumière, d'air...

Selon une caractéristique avantageuse de l'invention, ledit longeron comprend des moyens de maintien d'au moins un élément d'habillage dudit pavillon.

Cette approche permet de solidariser facilement et efficacement un ou plusieurs panneaux d'habillage, tel qu'un ciel de toit, recouvrant la surface intérieure d'un pavillon de véhicule automobile.

De façon avantageuse, ledit rail central peut assurer le guidage et/ou le maintien d'au moins un des équipements appartenant au groupe comprenant :
- les rétroviseurs ;
- les écrans de visualisation ;
- les écrans de systèmes de navigation ;
- les terminaux DVD ;
- les consoles de jeu ;
- les boîtes de rangement;
- les dispositifs d'éclairage direct et/ou indirect;
- les dispositifs de maintien et/ou d'arrêt de charge;
- les dispositifs de diffusion d'air.

Ces différents équipements peuvent être installés à demeure sur le rail (par exemple un rétroviseur), ou amovibles. Dans ce dernier cas, une zone et/ou des moyens de solidarisation / désolidarisation sont prévus (pouvant permettre le cas échéant les connexions électriques, si nécessaire).

Ainsi, de façon avantageuse, au moins ledit rail central comprend et/ou coopère avec des moyens d'insertion et de retrait d'un dispositif destiné à être maintenu et/ou guidé par ledit rail central.

On peut également prévoir que ledit rail central porte au moins un dispositif mobile en coulissement par rapport audit rail et en rotation par rapport à un axe sensiblement vertical.

Selon un autre aspect avantageux de l'invention, ledit rail central porte un dispositif multifonctions s'étendant sensiblement sur toute la longueur dudit longeron.

Le longeron peut ainsi permettre de solidariser un module formant un bloc près à être assemblé, intégrant une multitude de fonctions telles que des fonctions de rangement, d'éclairage, de diffusion d'air, multimédia (écrans de visualisation, terminaux DVD, consoles de jeu...)...

Selon une autre caractéristique avantageuse de l'invention, ledit longeron comprend au moins un élément de renfort destiné à au moins une des fonctions suivantes :
- renfort de la structure dudit véhicule en cas de choc frontal ;
- renfort de la structure dudit véhicule en cas de retournement ;
- renfort et/ou support du pavillon dudit véhicule.

Le longeron peut donc participer à renforcer la structure d'un véhicule et ainsi permettre d'augmenter la sécurité des passagers en cas d'accident.

L'invention concerne également un véhicule automobile selon la revendication 21.

D'autres caractéristiques et avantages de l'invention apparaîtront plus clairement à la lecture de la description suivante de modes de réalisation préférentiels, donné à titre de simples exemples illustratifs et non limitatifs, et des dessins annexés parmi lesquels :
- la figure 1 présente un exemple de système d'aménagement selon l'invention, comprenant un longeron central et des palettes pare-soleil mobiles ;
- la figure 2 illustre un système similaire à celui de la figure 1, avec des stores à cassette mobile ;
- les figure 3 et 4 illustrent une diffusion d'air de ventilation à l'intérieur d'un habitacle par un longeron central selon l'invention ;
- la figure 5 illustre la mise en oeuvre de traverse clapet qui selon l'invention permettent l'introduction d'air de ventilation dans l'habitacle ;

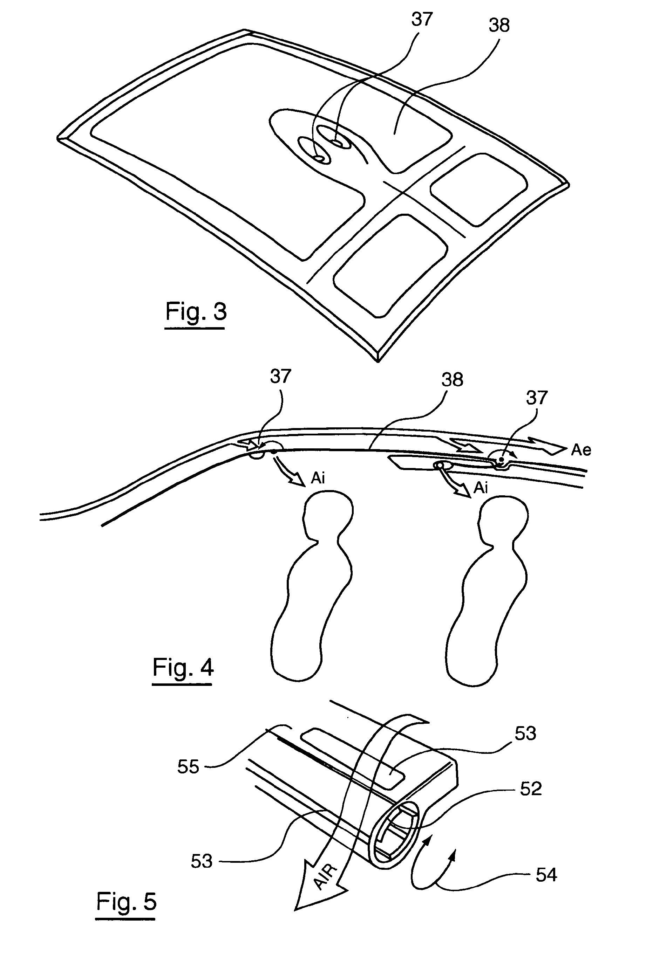

- la figure 5 présente un autre mode de mise en oeuvre de store d'occultation, mettant en oeuvre des baleines déployables ;

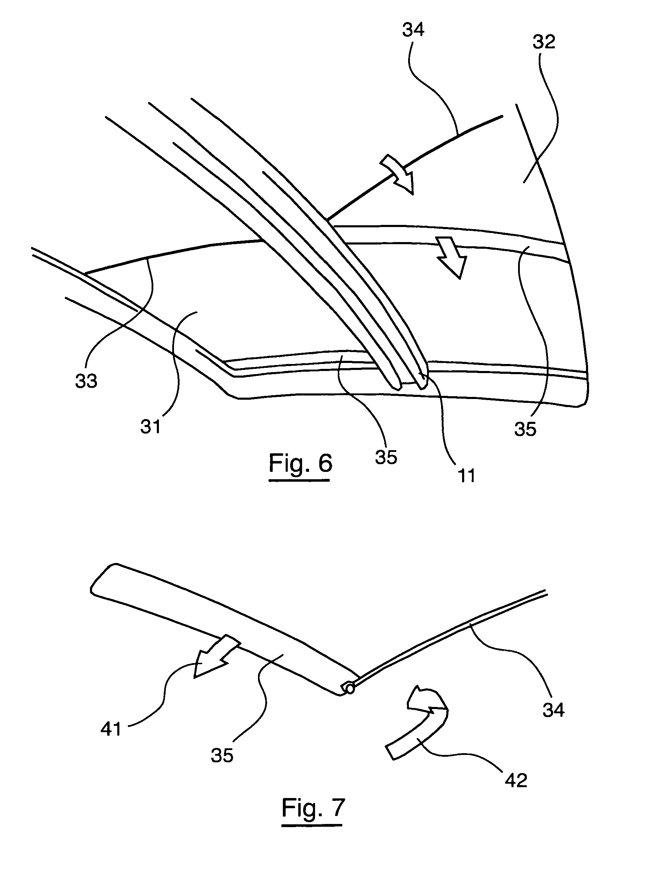

- la figure 7 montre un exemple de mise en oeuvre d'une baleine déployable dans le système de la figure 3 ;

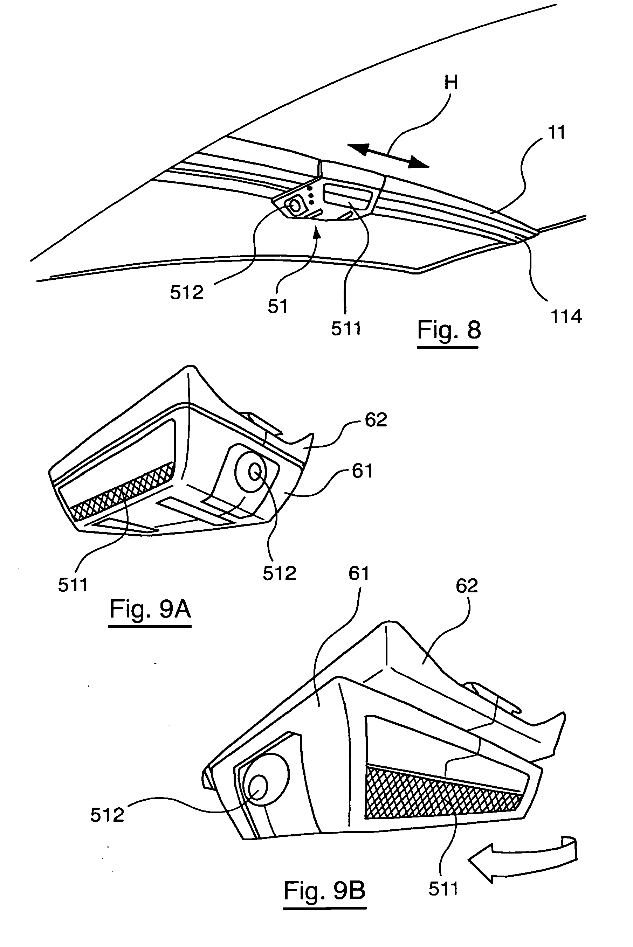

- la figure 8 présente un longeron central selon l'invention, équipé d'un module de rangement coulissant et pivotant ;
- les figures 9A et 9B présentent le module de rangement de la figure 5 dans deux positions distinctes ;

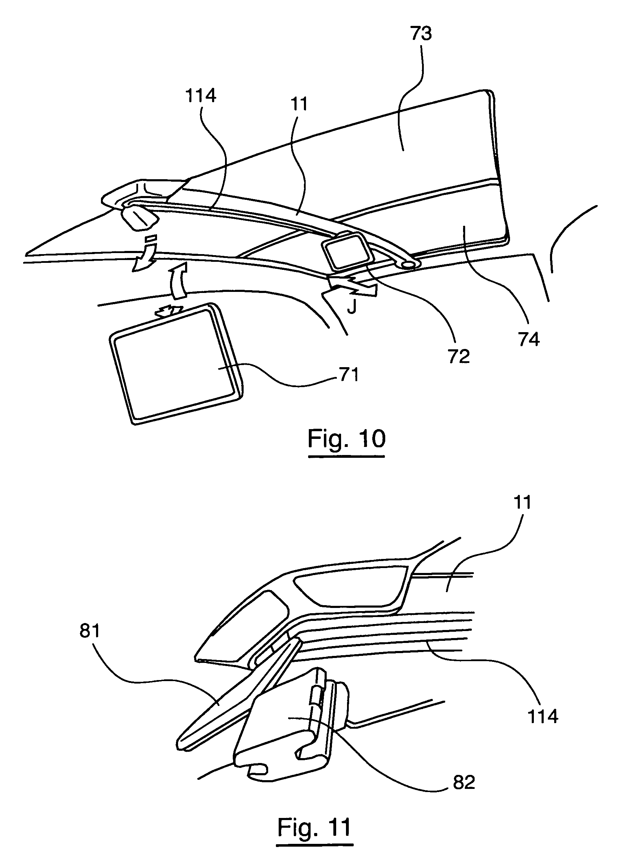

- la figure 10 montre un autre système d'aménagement selon l'invention permettant la mise en oeuvre d'écrans amovibles ;
- la figure 11 montre plus précisément le mécanisme d'insertion de l'écran de la figure 7 dans le rail central ;

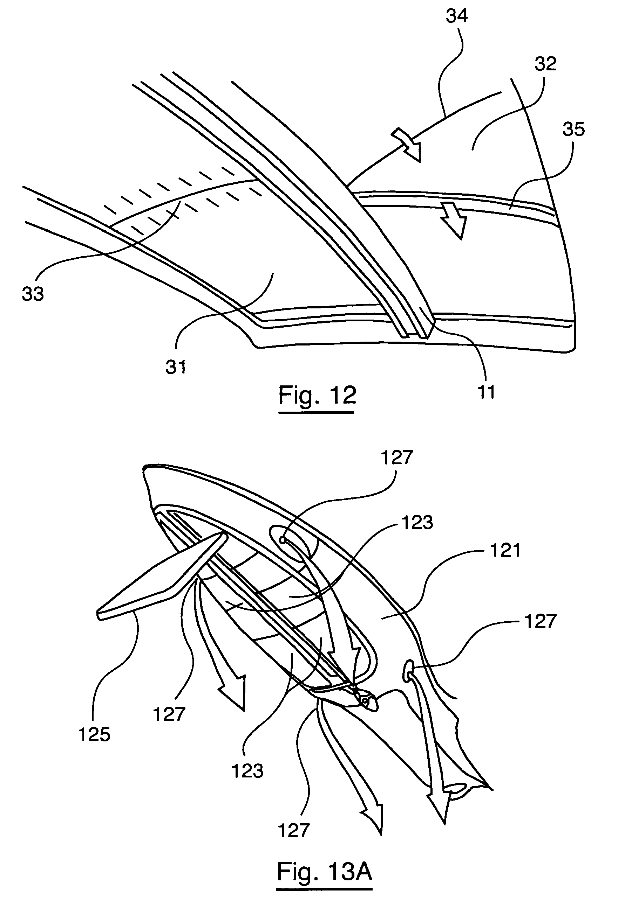

- la figure 12 illustre la mise en oeuvre de stores à baleines lumineuses;

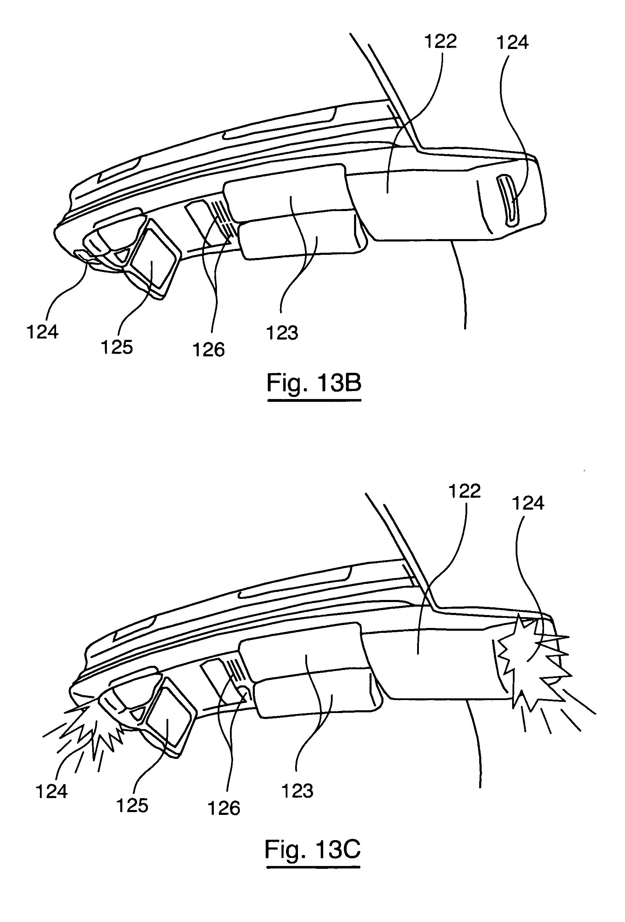

- les figures 13a, 13b, 13c illustrent la mise en place de modules multifonctions à l'intérieur de l'habitacle d'un véhicule au moyen d'un longeron selon l'invention ;

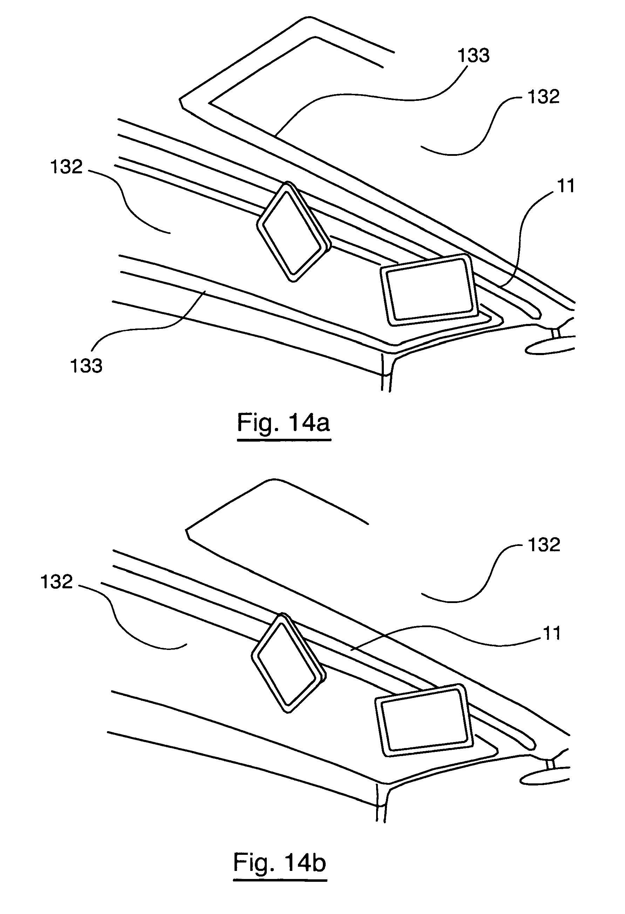

- les figures 14a et 14b illustrent une variante de l'invention dans laquelle des éléments d'habillage du pavillon sont maintenus par un longeron selon l'invention ;

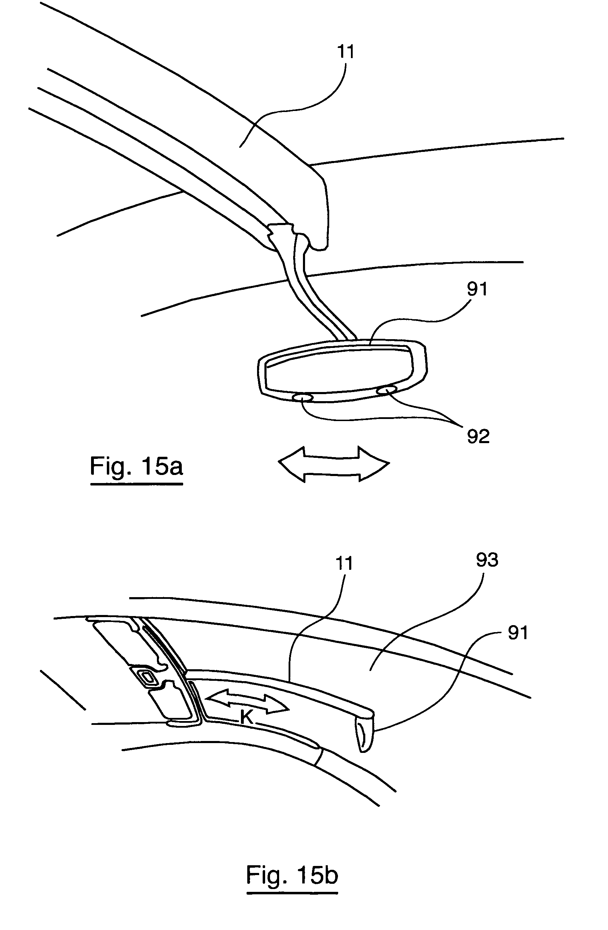

- la figure 15a illustre la mise en oeuvre d'un rétroviseur dans un système d'aménagement selon l'invention ;
- la figure 15b illustre une variante d'un longeron central selon l'invention qui s'étend sur une portion de pare-brise ;

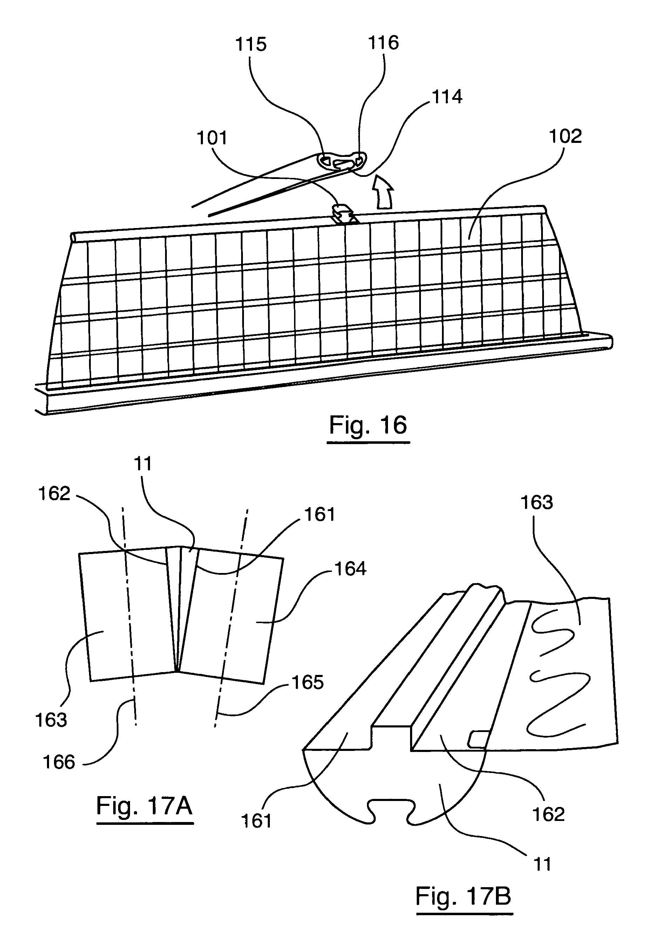

- la figure 16 montre la mise en oeuvre d'un filet arrêt de charge, dans un système selon l'invention ;
- les figures 17a et 17b illustrent un longeron selon l'invention, permettant de compenser une absence de parallélisme d'un pavillon vitré ;

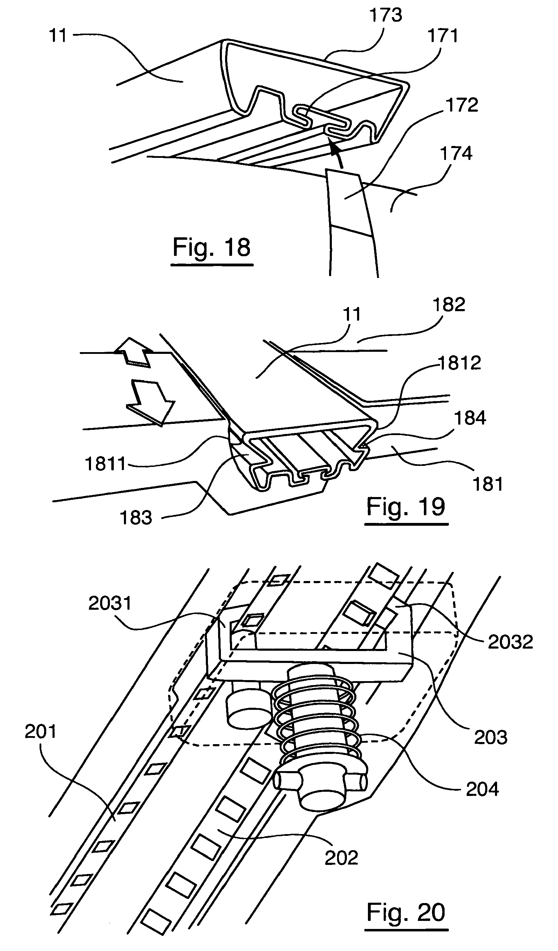

- la figure 18 présente un moyen de guidage d'un élément de maintien central d'une toile d'occultation ;
- la figure 19 illustre le guidage d'une barre de tirage d'une toile d'occultation avec un longeron selon l'invention ;
- la figure 20 présente un exemple de coulisseau adapté au longeron de l'invention.

Le système d'aménagement de l'espace intérieur d'un véhicule selon l'invention repose donc sur la mise en oeuvre d'un longeron central, s'étendant longitudinalement à l'intérieur du véhicule, au milieu de celui-ci, le long ou au voisinage du pavillon.

Il s'applique notamment efficacement pour les pavillons tout ou en partie vitrés.

Selon l'invention, ce longeron central comprend trois zones fonctionnelles distinctes, correspondant à trois rails de guidage :
- deux zones symétriques permettant notamment le guidage et le maintien d'éléments d'occultation, notamment de stores et/ou de palettes pare-soleil ;
- un rail central, ouvert vers le bas du véhicule, pouvant notamment recevoir des équipements amovibles et/ou devant être alimentés par des signaux électriques.

Avantageusement, le longeron comprend une quatrième zone fonctionnelle, correspondant à sa face orientée vers le haut dudit véhicule automobile comprend au moins une zone. Cette face peut notamment être utilisée pour fournir :
- une surface de guidage et/ou de support d'une toile d'occultation, qui maintient efficacement la toile tout en lui conférant un galbe, si nécessaire ;
- une surface ou un logement de guidage et/ou de support d'une barre de tirage et/ou d'au moins une baleine. Dans ce cas, il n'est pas obligatoire que la barre de tirage ou les baleines soient guidées par des rails latéraux ;
- un logement d'au moins un câble d'actionnement (par exemple pour le déploiement d'une ou plusieurs toiles) et/ou d'au moins un câble électrique ;
- une zone de diffusion de lumière, permettant par exemple de fournir un éclairage diffus ;
- un logement de moyens d'éclairage;
- un logement de moyens de diffusion d'un flux d'air.

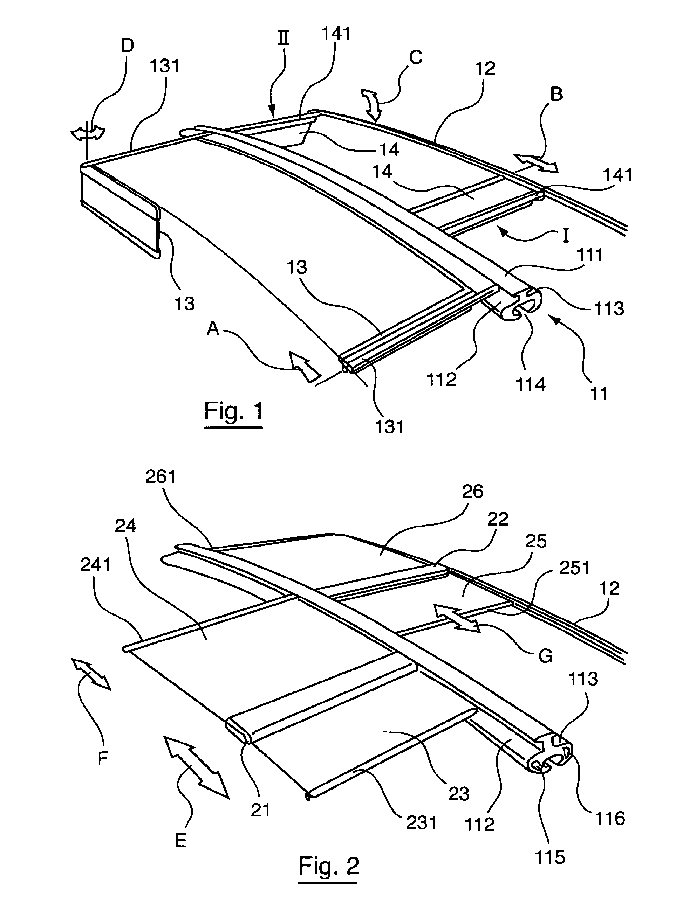

La figure 1 présente schématiquement un premier système d'aménagement de ce type. Sur cette figure 1, on a représenté un longeron central 11, et un rail latéral 12, ainsi que des palettes pare-soleil 13 et 14 (chacune dans deux positions possibles). Le pavillon vitré et le second rail latéral ne sont pas représentés.

Le longeron central 11 peut par exemple être collé à ce pavillon, par la zone 111. De même, les deux rails latéraux 12 peuvent être solidarisés au pavillon, et/ou au châssis du véhicule.

Le longeron 11 comprend donc un rail central 114 (dont des rôles sont décrits plus loin) deux rails de côté 112 et 113, qui permettent chacun le guidage de barres de support associées respectivement aux palettes 13 et 14, en coopération avec les rails latéraux 12. Ces palettes peuvent coulisser le long des rails (flèches A et B), basculer pour passer d'une position escamotée I à une position basculée de protection contre le soleil II (flèche C).

Avantageusement, la palette peut également pivoter latéralement (flèche D), pour protéger contre les effets du soleil dans une vitre latérale, aussi bien pour les places avant que pour les places arrière.

Il peut bien sûr y avoir plusieurs palettes pare-soleil de chaque côté du longeron central. Elles peuvent être équipées de moyens de blocage permettant de les maintenir dans une position pré-déterminée le long de ce longeron. Elles peuvent également être combinées, ou coopérer, avec des stores d'occultation.

La figure 2 présente un exemple de mise en oeuvre de stores d'occultation. Dans un mode de réalisation simple, on peut prévoir un seul store de chaque côté du longeron central, dont l'enrouleur est fixe, à l'avant ou à l'arrière du véhicule.

Dans le cas de la figure 2, on a équipé chaque côté du longeron d'une cassette 21, 22, qui peut coulisser le long des rails (flèche E). Chacune de ces cassettes porte deux toiles d'occultation 23, 24, 25 et 26, pouvant être déployées de part et d'autre de chacune des cassettes 21 et 22 respectivement (flèches F et G).

Ainsi, il est possible d'occulter tout ou partie de la surface du pavillon vitré, et de définir très précisément, de façon modulaire, la surface que l'on souhaite occulter.

Ceci peut par exemple permettre aux passagers avant et aux passagers arrière de choisir indépendamment l'occultation qu'ils souhaitent.

Les cassettes 21, 22, ainsi que les barres de tirage 231, 241, 251 et 261, associées respectivement aux quatre toiles, présentent des moyens de guidage dans les rails de côté du longeron central et dans les rails latéraux, et également des moyens de verrouillage, permettant de les immobiliser dans une position choisie.

Une succession de crantages peut également être ménagée au niveau du longeron central et des rails latéraux de façon à permettre l'immobilisation des barres de tirage dans différentes positions.

Dans un autre mode de réalisation, illustré par la figure 6, on associe aux toiles d'occultation 31 et 32 des baleines 33 et 34, qui permettent de donner aux toiles 31 et 32 un galbe correspondant à celui du pavillon, ou à tout le moins de soutenir la toile dans une position souhaitée.

Avantageusement, ces baleines sont amovibles, et montées mobiles en rotation, de façon que, au repos, elles soient logées à l'intérieur du longeron central, et qu'elles se déploient et se rétractent au passage de la barre de tirage 35.

Différents modes de mise en oeuvre peuvent être prévus pour la mise en oeuvre de cette technique. Comme illustré par la figure 7, la barre de tirage 35 peut entraîner une rotation (flèche 42) de la baleine 34, par simple contact, aussi bien lors du déploiement (flèche 41) que lors de la rétraction.

Des moyens spécifiques d'actionnement (doigts, ergots, crémaillères...) peuvent être prévus pour contrôler le déplacement des baleines. On peut également prévoir que l'actionnement des baleines est indépendant de la barre de tirage, et contrôlé par la toile, ou manuellement ou de façon motorisée, par l'utilisateur.

La figure 8 présente une première application du rail central 114. Celui-ci porte une console 51, qui peut coulisser (flèche H) le long du longeron 11.

Ce module de rangement peut comprendre une ou deux zones 511 de rangement d'objets de petite taille, tels que des CD ou des cartes routières. Il est, avantageusement, également équipé de moyens d'éclairage 512. Ces moyens d'éclairage sont alimentés par des câbles électriques logés à l'intérieur du longeron central 11 (non représentés).

Un système de guidage de câbles électrique peut être prévu à l'intérieur du longeron, pour suivre le déplacement du module le long de celui-ci. On peut également prévoir des points de contact à des emplacements spécifiques, auxquels doit être placé le module, ou encore des zones de contact réalisées sur toute la longueur du longeron, et coopérant avec des contacts prévus sur le module.

Selon une variante de l'invention, une goulotte est ménagée sur la face supérieure du longeron de façon à permettre le passage de câbles électriques. On peut également prévoir que des logements soient formés sur la face supérieure du longeron de façon à y placer par exemple des éléments d'éclairage diffus.

Avantageusement, ce module peut pivoter. Ainsi, sur la figure 9A, le module est dans la position présentée sur la figure 5, la partie support 61 étant dans le même axe que la partie coulissante 62. Dans la figure 9B, en revanche, la partie 61 a basculé de 90° par rapport à la partie coulissante 62. Ceci permet par exemple, pour des passagers arrière, d'accéder plus facilement aux zones de rangement 511, et de bénéficier plus efficacement de l'éclairage 512.

Tel qu'illustré à la figure 2, le longeron comprend des moyens de diffusion de flux d'air. Il peut ainsi présenter deux cavités 115 et 116 qui s'étendent sensiblement sur toute sa longueur. Ces cavités 115 et 116 permettent d'acheminer de l'air de ventilation à l'intérieur du véhicule. Une seule cavité peut bien sûr être ménagée dans le longeron central. La ou les cavités peuvent également être ménagées sur une portion de sa longueur.

Les cavités 115 et 116 peuvent être directement reliées au système de ventilation classique du véhicule.

Dans une variante de l'invention illustrée aux figures 3 et 4, des entrées d'air, formant une écope ou une ouverture, sont ménagées au niveau du pavillon 38 du véhicule. Ces entrées d'air sont reliées au longeron central selon l'invention et permettent, lorsqu'elles sont ouvertes, de faire pénétrer de l'air extérieur Ae à l'intérieur de l'habitacle Ai.

Dans un autre mode de réalisation illustré à la figure 5, une traverse à clapet 55 peut être accolée ou intégrée au pavillon (devant, derrière, entre ou dans le (les) éléments transparents du pavillon). La traverse clapet 55 peut également être intégrée à l'élément transparent (par exemple réalisé en polycarbonate) formant le pavillon par moulage, par surmoulage, collage... Le clapet 52 est monté à rotation 54 de façon à libérer ou à fermer l'entrée d'air 53. L'ouverture et la fermeture du ou des clapets peut être manuelle ou motorisée.

Le système à clapet peut également être directement intégré au pavillon ou au longeron central.

Des moyens intermédiaires de filtrage, de chauffage, de climatisation peuvent bien sûr être prévus.

Divers équipements, liés au longeron 11 de façon fixe ou mobile, et dédiés à la ventilation peuvent également permettre la diffusion d'air de ventilation en des points précis de l'habitacle. La console 51 peut, par exemple, intégrer des fonctions de diffuseur d'air et des moyens de commande permettant aux occupants d'un véhicule de contrôler les débits d'air de ventilation, sa température, son hygrométrie...

On peut également prévoir que des logements soient prévus sur la face supérieure du longeron de façon à y loger des éléments de diffusion d'air.

Le longeron central 11, et notamment son rail central 114, peut également permettre le coulissement de différents appareils amovibles ou non, alimentés électriquement, tels que des moyens d'éclairage ou des écrans, comme illustré en figure 10. Ces écrans 71, 72, sont préférentiellement des écrans plats, permettant la diffusion de DVD, ou la mise en oeuvre de jeux vidéo, ou encore l'affichage d'informations diverses par exemple délivrées par un GPS.

Un écran peut coulisser le long du rail (flèche J), de façon à être placé à l'emplacement souhaité.

Ces écrans 71 sont préférentiellement amovibles. L'extrémité du rail est équipée d'une ou plusieurs zones d'insertion, protégée par un clapet 81, plus précisément illustrée sur la figure 11.

Pour insérer un écran 71, et plus généralement tout autre équipement, électrique ou non, on ouvre le clapet 81, puis on insère le coulisseau 82 prévu à cet effet sur l'équipement dans le rail central 114.

Le coulisseau peut être bloqué dans le rail selon la technique illustrée par la figure 20. Le rail porte deux crémaillères 201, 202, présentant une série de logements dans lesquels des crochets 2031, 2032 du coulisseau 203 peuvent venir s'inscrire. Ce coulisseau 203 est mobile perpendiculairement aux crémaillères entre une position verrouillée (les crochets sont introduits dans les logements, et le coulisseau est bloqué en coulissement) et une position déverrouillée (les crochets sont libérés des logements, et le coulisseau est mobile en coulissement).

La position par défaut est la position verrouillée, des moyens de rappel 204 tendant à ramener le coulisseau dans cette position. Il suffit d'appuyer axialement sur le coulisseau pour le déplacer, puis de le relâcher pour qu'il se verrouille.

Dans le cas d'équipements nécessitant une alimentation électrique, la connexion peut se faire automatiquement lors de cette insertion.

Une fois que l'équipement est en place dans le rail 114, on replie le clapet 81.

Le câblage électrique du longeron 11 peut également permettre l'alimentation de divers systèmes d'éclairage. En particulier, tel que cela est représenté à la figure 12, les baleines 33 et 34 permettant de soutenir les toiles 31 et 32 peuvent être lumineuses, de façon à constituer des systèmes d'éclairage diffus. Elles peuvent par exemple être incrustées de diodes électroluminescentes, ou bien de fibres optiques, ou former des barreaux diffuseurs de lumière, et permettre la créations de diverses ambiances lumineuses à l'intérieur de l'habitacle d'un véhicule. D'autres sources lumineuses peuvent bien sûr être mises en oeuvre.

On notera par ailleurs, sur la figure 10, un autre mode de mise en oeuvre de moyens d'occultation sous la forme d'une toile d'occultation 73 s'étendant sur toute la largeur du pavillon vitré 74.

Dans ce cas, un espace est ménagé entre le pavillon et le longeron central 11, pour permettre le passage de cette toile d'occultation 73. Les deux rails de côté du longeron central 11 sont alors regroupés pour former une surface supérieure du longeron, assurant le guidage et le maintien de la toile 73, et lui conférant, le cas échéant, un galbe correspondant à celui du pavillon.

Dans ce cas, bien sûr, le longeron n'est pas collé au pavillon sur toute sa longueur, mais est fixé à celui-ci, ou à des éléments de structure du véhicule, au moins par ses extrémités.

Dans ce cas également, la face supérieure du longeron, assurant le guidage et le maintien de la toile, peut présenter sur sa longueur une succession de crantages de forme complémentaire à celle de la barre de tirage, de façon que celle-ci y soit inscrite afin de bloquer la toile dans des positions choisies.

La face supérieure ou surface supérieure du longeron peut également permettre le guidage et/ou de support d'une barre de tirage et/ou de baleines.

Dans ce mode de réalisation particulier, le longeron permet de renforcer la structure du véhicule en cas de choc frontal, en cas de retournement et donc de participer à améliorer la sécurité des occupants d'un véhicule.

Le longeron peut également assurer la fonction de renfort et/ou support du pavillon dudit véhicule. Dans ce cas, du fait du maintien mécanique assuré par le longeron et de ses connections avec la structure du véhicule, la section et la masse du matériau mis en oeuvre pour la réalisation du pavillon peut être réduite.

Tel qu'il est illustré aux figures 13a, 13b et 13c, le longeron central peut également permettre la mise en place à l'intérieur de l'habitacle d'un véhicule, de modules multifonctions 121, 122. Ces modules multifonctions intègrent, par exemple, des écrans 125, des coffres de rangement 123, des grilles de ventilation 126, 127, des systèmes d'éclairage 124... Ces modules multifonctions constituent des blocs prêts à être montés sur le longeron central et peuvent s'étendre sensiblement sur toute sa longueur ou sur toute la longueur d'un pavillon.

Comme cela apparaît aux figures 14a et 14b, le longeron central 11 permet également la mise en place et la solidarisation d'éléments d'habillage, ou coiffes, 131, 132 formant un ciel de toit destiné à recouvrir la face intérieure d'un pavillon tôlé. Cette solidarisation peut par exemple se faire par clippage des éléments d'habillage 131, 132 sur le longeron central 11. Tout autre technique de solidarisation appropriée peut bien sûr être mise en oeuvre. Cette approche permet un montage et un démontage aisés des éléments d'habillage.

Ainsi, le système d'aménagement de l'invention peut être adapté à plusieurs versions d'un modèle de véhicule, comprenant par exemple une version à pavillon vitrée et une version à pavillon classique. Ceci permet également de proposer un habillage temporaire et amovible pour un pavillon vitré. Il est également ainsi possible de changer aisément d'habillage, en fonction des besoins ou des envies des utilisateurs.

Les éléments d'habillage 131, 132 peuvent en outre permettre le support d'éléments d'éclairage 133 afin de créer une ambiance lumineuse à l'intérieur de l'habitacle d'un véhicule. Dans ce cas, les éléments d'habillage peuvent être au moins partiellement translucides. Sur la figure 14a, les éléments d'éclairage 133 sont allumés, alors que sur la figure 14b, les éléments d'éclairage 133 sont éteints. Ces éléments d'éclairage peuvent être alimentés au moyens de câbles passant à l'intérieur de longeron central 11.

Dans le cas d'un pavillon vitré, les éléments d'habillage peuvent être équipés de moyens de protection contre le soleil, la température ou la lumière.

Comme on le voit sur la figure 15a, le longeron central 11 de l'invention permet également la mise en place aisée d'un rétroviseur intérieur. Il n'est ainsi plus nécessaire de coller le rétroviseur 91 au pare-brise, ce qui est une opération peu aisée, et dont l'effet est généralement peu esthétique.

En outre, ce rétroviseur 91 peut être équipé de moyens d'éclairage 92, de façon simple et efficace, sans problème particulier de connectique, puisque l'alimentation électrique est présente dans le rail.

Dans une variante de l'invention, illustrée à la figure 15b, un longeron central 11 selon l'invention est rapporté, par exemple par collage, sur la surface intérieure d'un pare-brise panoramique 93. Un tel longeron peut également être fixé sur (au moins une partie d')un pare-brise classique. Le longeron 11 permet la mise en place du rétroviseur 91 et le réglage transversal de sa position selon la flèche K. Il devient alors aisé, pour les différents utilisateurs d'un véhicule, d'adapter à leur morphologie, de façon simple et efficace, la position du rétroviseur 91, et d'améliorer en conséquence l'ergonomie du poste de conduite.

Dans une autre variante de l'invention, le longeron central 11 peut se prolonger, d'un seul bloc, jusque sur une portion du pare-brise 11 de façon à permettre, par exemple, le déploiement du ou des stores pare-soleil dans la région supérieure du pare-brise, afin de protéger des rayons du soleil pouvant gêner un conducteur ou un passager avant.

De nombreux autres équipements et utilisations peuvent être prévus pour le longeron central de l'invention et ses différents rails.

Par exemple, comme illustré sur la figure 16, le rail central 114 peut être utilisé pour la fixation amovible de différents éléments, et par exemple le crochet d'accrochage 101 d'un filet arrêt de charge 102 destiné à empêcher la projection d'objets contenus dans un coffre, par exemple en cas de coup de frein brusque.

Dans le cas d'un pavillon non rectangulaire, le longeron de l'invention peut permettre de compenser, complètement ou partiellement, l'absence de parallélisme. Ainsi, comme illustrés par les figures 17a et 17b, les rails de côté 161 et 162 s'élargissent progressivement vers l'avant du véhicule (partie plus large du pavillon). Ainsi, les stores 163 et 164 se déploient selon des axes 165 et 166 non parallèles, et l'occultation de la partie centrale du pavillon est assurée par le longeron.

On peut également équiper le longeron de volets sensiblement trapézoïdaux, qui se déploient par exemple sous l'action d'un doigt ou d'un pion solidaire de la barre de tirage.

Selon un mode de réalisation particulier de l'invention, illustré par la figure 18, le rail central 171 coopère avec un élément de maintien et/ou de guidage 172 s'étend selon l'axe longitudinal de la toile 174 et sensiblement sur toute sa longueur. Il y est solidarisé, par exemple par collage. D'autres modes de solidarisation peuvent bien sûr être envisagés. L'élément de maintien et/ou de guidage 172 pourra ainsi, par exemple, être thermosoudé sur la toile. Il peut encore y être cousu. Il peut également être réalisé sous la forme d'un bourrelet formé et cousu sur la toile.

L'élément de maintien et/ou de guidage 172 est réalisé dans un matériau résistant présentant notamment de bonnes aptitudes au coulissement. Il pourra être réalisé, par exemple, en polyéthylène. Il peut présenter, le cas échéant, des éléments facilitant ce coulissement (patins, billes, aiguilles...).

Il présente préférentiellement une section de faible épaisseur de façon qu'il n'augmente pas considérablement le diamètre d'enroulement de la toile sur le tube d'enroulement.

La forme intérieure du rail central 171 est complémentaire de l'élément de maintien et/ou de guidage 172 de façon qu'il puisse y coulisser et y être maintenu. Le rail central 171 et l'élément de maintien et/ou de guidage 171 forment un système de type queue d'aronde.

Le longeron présente, dans ce mode de réalisation, une face supérieure 173 sensiblement plane, destinée à venir en contact avec la face intérieure du pavillon 1 auquel elle est solidarisée par exemple par collage.

Comme illustré par la figure 19, le longeron peut également guider et/ou maintenir une barre de tirage 181, par la partie centrale de celle-ci.

La barre de tirage 181 est liée à l'extrémité libre de la toile 182. La barre de tirage 181 présente un galbe sensiblement égal au galbe transversal du pavillon.

La barre de tirage 181 présente deux portions de coulissement 1811 et 1812 destinées à coopérer avec les rails de côté 183 et 184.

La barre de tirage 181 est réalisée dans un matériau choisi de façon à résister aux efforts d'arrachement et/ou de suspension de charge. Il pourra notamment s'agir de polymère chargé.

On peut bien sûr prévoir une ou plusieurs baleines conçues et montées de la même façon que la barre de tirage.

La toile 182 peut être guidée sous le longeron. Dans un autre mode de réalisation, un espace peut être ménagé entre le pavillon et le longeron, pour permettre le passage de la toile. Dans ce cas, le longeron n'est pas collé sur toute sa longueur au pavillon, mais est fixé à celui-ci, ou à des éléments de structure du véhicule, au moins par ses extrémités.

Dans ce mode de réalisation de l'invention, des rails latéraux ne sont pas obligatoires. Les extrémités latérales de la toile ne sont alors pas guidées, mais maintenues par la barre de tirage 181 et, éventuellement, des baleines. Ceci peut permettre notamment de faciliter l'installation de stores d'occultation dans les véhicules dont le pavillon ne présente pas des bords latéraux parallèles.

On notera que le longeron central selon l'invention peut être monté sur la structure du véhicule, par exemple avant mise en place du pavillon. Il peut également être assemblé préalablement au pavillon, de même que différents équipements, par exemple pour que le pavillon puisse être livré sous la forme d'un module pré-équipé au constructeur automobile.

Par ailleurs, il est important de noter que le longeron de l'invention peut, dans certains modes de réalisation, ne s'étendre que sur une partie du pavillon et/ou du pare-brise. Par exemple, il peut être limité à une partie supérieure d'un pare-brise.

## Revendications

1. Système d'aménagement de véhicule automobile à longeron central (11) pour pavillon (38), s'étendant à l'intérieur dudit véhicule, ledit longeron (11) présentant au moins trois rails parallèles :
- deux premiers rails de côté (112, 113, 183, 184), ouverts dans une direction sensiblement parallèle audit pavillon (38), de part et d'autre dudit longeron (11) ;
- un troisième rail central (114), ouvert dans une direction sensiblement perpendiculaire audit pavillon (38), vers le bas dudit véhicule,
**caractérisé en ce que** lesdits premiers rails de côté (112, 113, 183, 184) permettent chacun le guidage d'au moins un élément d'occultation d'au moins une partie de la surface dudit pavillon (38), et coopèrent chacun avec un rail latéral (12), s'étendant au voisinage d'un bord dudit pavillon (38), de façon à guider et/ou maintenir au moins un support de palette pare-soleil (13, 14) desdits éléments d'occultation,
et **en ce que** ledit support de palette (13, 14) est désolidarisable du rail de côté (112, 113, 183, 184) correspondant, et monté sur une liaison pivotante dans ledit rail latéral (12), de façon à pouvoir se placer sensiblement parallèlement à une vitre latérale dudit véhicule.

2. Système d'aménagement selon la revendication 1, **caractérisé en ce que** lesdits éléments d'occultation comprennent au moins un store d'occultation (163, 164), et **en ce que** lesdits premiers rails de côté (112, 113, 183, 184) et lesdits rails latéraux (12) guident et/ou maintiennent également au moins une barre de tirage (231, 241, 251, 261, 35, 181) et/ou au moins une baleine (33, 34) et/ou au moins une toile d'occultation (23, 24, 25, 26, 31, 32) du ou desdits stores d'occultation. (163, 164).

3. Système d'aménagement selon l'une quelconque des revendications 1 et 2, **caractérisé en ce que** ledit longeron central (11) assure le guidage et le maintien d'une barre de tirage (231, 241, 251, 261, 35, 181) et/ou d'au moins une baleine (33, 34), par une zone de suspension s'étendant au milieu de ladite barre de tirage (231, 241, 251, 261, 35, 181) ou de la ou desdites baleines (33, 34).

4. Système d'aménagement selon la revendication 3, **caractérisé en ce que** ladite zone de suspension comprend deux portions d'appui coopérant respectivement avec lesdits rails de côté (112, 113, 183, 184).

5. Système d'aménagement selon l'une quelconque des revendications 1 à 4, **caractérisé en ce que** ledit longeron (11) porte au moins une baleine (33, 34) de maintien d'une toile d'occultation (23, 24, 25, 26, 31, 32).

6. Système d'aménagement selon la revendication 5, **caractérisé en ce que** chacune desdites baleines (33, 34) est articulée par rapport audit longeron (11) et mobile entre deux positions :
- une position de repos, dans laquelle elle s'étend sensiblement parallèlement audit longeron (11) ;
- une position de maintien de toile, dans laquelle elle s'étend sensiblement perpendiculairement audit longeron (11).

7. Système d'aménagement selon l'une quelconque des revendications 1 à 6, **caractérisé en ce que** ledit longeron (11) présente un espace avec ledit pavillon (38), permettant le passage et le maintien d'une toile d'occultation (23, 24, 25, 26, 31, 32) s'étendant sensiblement sur toute la largeur dudit pavillon (38).

8. Système d'aménagement selon l'une quelconque des revendications 1 à 7, **caractérisé en ce que** ledit rail central (114) coopère avec une toile d'occultation (23, 24, 25, 26, 31, 32) portant au moins un élément de maintien et/ou de guidage éloigné des bords latéraux de ladite toile (23, 24, 25, 26, 31, 32) et s'étendant parallèlement audit axe de déploiement,
la section dudit rail central (114) étant complémentaire de celle dudit élément de maintien et/ou de guidage.

9. Système d'aménagement selon l'une quelconque des revendications 1 à 8, **caractérisé en ce que** ledit rail central (114) et/ou lesdits rails de côté (112, 113, 183, 184) assure le guidage et/ou le maintien d'une barre de tirage (231, 241, 251, 261,35,181), par une partie centrale de cette dernière.

10. Système d'aménagement selon l'une quelconque des revendications 1 à 9, **caractérisé en ce que** ledit longeron (11) comprend des moyens de distribution et/ou de guidage d'un flux d'air.

11. Système d'aménagement selon la revendication 10, **caractérisé en ce que** lesdits moyens de distribution et/ou de guidage d'un flux d'air sont alimentés par au moins une ouverture (37) prévue à cet effet dans ledit pavillon (38).

12. Système d'aménagement selon l'une quelconque des revendications 1 à 11, **caractérisé en ce que** ledit longeron (11) comprend au moins un passage de câble, permettant l'actionnement et/ou l'alimentation électrique d'au moins un dispositif porté par ledit longeron (11).

13. Système d'aménagement selon la revendication 12, **caractérisé en ce que** ladite alimentation électrique alimente des moyens d'éclairage (124, 133) montés dans au moins un des éléments appartenant au groupe comprenant :
- ledit longeron (11) ;
- une toile d'occultation (23,24,25,26,31,32) ;
- une barre de tirage (231, 241, 251, 261, 35,181) ;
- une baleine (33, 34) ;
- un élément d'habillage (131, 132).

14. Système d'aménagement selon l'une quelconque des revendications 1 à 13, **caractérisé en ce que** la face dudit longeron (11) orientée vers le haut dudit véhicule automobile comprend au moins une zone fonctionnelle.

15. Système d'aménagement selon la revendication 14, **caractérisé en ce qu'**au moins une desdites zones fonctionnelles comprend :
- une surface de guidage et/ou de support d'une toile d'occultation (23 , 24, 25, 26 , 31, 32) ;
- une surface ou un logement de guidage et/ou de support d'une barre de tirage (231, 241, 251, 261, 35, 181) et/ou d'au moins une baleine (33, 34) ;
- un logement d'au moins un câble d'actionnement et/ou d'au moins un câble électrique ;
- une zone de diffusion de lumière (124, 133) ;
- un logement de moyens d'éclairage (512) ;
- un logement de moyens de diffusion d'un flux d'air (126, 127).

16. Système d'aménagement selon l'une quelconque des revendications 1 à 15, **caractérisé en ce que** ledit longeron (11) comprend des moyens de maintien d'au moins un élément d'habillage (131, 32) dudit pavillon (38).

17. Système d'aménagement selon l'une quelconque des revendications 1 à 16, **caractérisé en ce que** ledit rail central (114) assure le guidage et/ou le maintien d'au moins un des équipements appartenant au groupe comprenant :
- les rétroviseurs (91) ;
- les écrans de visualisation (71, 72, 125) ;
- les écrans de systèmes de navigation ;
- les terminaux DVD ;
- les consoles de jeu ;
- les boîtes de rangement (123) ;
- les dispositifs d'éclairage direct et/ou indirect (124, 133) ;
- les dispositifs de maintien et/ou d'arrêt de charge ;
- les dispositifs de diffusion d'air (126, 127).

18. Système d'aménagement selon l'une quelconque des revendications 1 à 17, **caractérisé en ce que** ledit rail central (114) porte au moins un dispositif mobile en coulissement par rapport audit rail (114) et en rotation par rapport à un axe sensiblement vertical.

19. Système d'aménagement selon l'une quelconque des revendications 1 à 18, **caractérisé en ce qu'**au moins ledit rail central (114) comprend et/ou coopère avec des moyens d'insertion et de retrait d'un dispositif destiné à être maintenu et/ou guidé par ledit rail central (114).

20. Système d'aménagement selon l'une quelconque des revendications 1 à 19, **caractérisé en ce que** ledit longeron (11) comprend au moins un élément de renfort destiné à au moins une des fonctions suivantes :
- renfort de la structure dudit véhicule en cas de choc frontal ;
- renfort de la structure dudit véhicule en cas de retournement ;
- renfort et/ou support du pavillon (38) dudit véhicule.

21. Véhicule automobile comprenant un système d'aménagement selon l'une quelconque des revendications 1 à 20.

## Claims

1. Motor vehicle fitting-out system with a central beam (11) for a roof (38), which system extends in the interior of the said vehicle, the said beam (11) having at least three parallel rails:
- two first, side rails (112, 113, 183, 184) which are open in a direction substantially parallel to the said roof (38), on both sides of the said beam (11); and
- a third, central rail (114) which is open in a direction substantially perpendicular to the said roof (38), towards the bottom of the said vehicle,
**characterised in that** the said first, side rails (112, 113, 183, 184) each permit guiding of at least one element for shielding of at least part of the surface of the said roof (38), and each co-operate with a lateral rail (12) which extends in the vicinity of an edge of the said roof (38), such as to guide and/or retain at least one sun visor support (13, 14) of the said shielding elements,
and **in that** the said visor support (13, 14) can be detached from the corresponding side rail (112, 113, 183, 184) and fitted on a pivoting connection in the said lateral rail (12), such as to be able to be placed substantially parallel to a lateral window of the said vehicle.

2. Fitting-out system according to claim 1, **characterised in that** the said shielding elements comprise at least one shielding blind (163, 164), and **in that** the said first side rails (112, 113, 183, 184) and the said lateral rails (12) also guide and/or retain at least one draw bar (231, 241, 251, 261, 35, 181), and/or at least one rod (33, 34), and/or at least one shielding fabric (23, 24, 25, 26, 31, 32) of the said shielding blind(s) (163, 164).

3. Fitting-out system according to either of claims 1 and 2, **characterised in that** the said central beam (11) assures the guiding and retention of a draw bar (231, 241, 251, 261, 35, 181) and/or at least one rod (33, 34), by a suspension area which extends in the middle of the said draw bar (231, 241, 251, 261, 35, 181) or the said rod(s) (33, 34).

4. Fitting-out system according to claim 3, **characterised in that** the said suspension area comprises two support portions which co-operate respectively with the said side rails (112, 113, 183, 184).

5. Fitting-out system according to any one of claims 1 to 4, **characterised in that** the said beam (11) bears at least one rod (33, 34) for retention of a shielding fabric (23, 24, 25, 26, 31, 32).

6. Fitting-out system according to claim 5, **characterised in that** each of the said rods (33, 34) is articulated relative to the said beam (11) and is mobile between two positions:
- a position of rest, in which it extends substantially parallel to the said beam (11); and
- a position of retention of the fabric, in which it extends substantially perpendicularly to the said beam (11).

7. Fitting-out system according to any one of claims 1 to 6, **characterised in that** the said beam (11) has a space relative to the said roof (38) which permits the passage and retention of a shielding fabric (23, 24, 25, 26, 31, 32) which extends along substantially the entire width of the said roof (38).

8. Fitting-out system according to any one of claims 1 to 7, **characterised in that** the said central rail (114) co-operates with a shielding fabric (23, 24, 25, 26, 31, 32) which bears at least one retention and/or guiding element, which is spaced from the lateral edges of the said fabric (23, 24, 25, 26, 31, 32) and extends parallel to the said axis of deployment,
the cross-section of the said central rail (114) being complementary to that of the said retention and/or guiding element.

9. Fitting-out system according to any one of claims 1 to 8, **characterised in that** the said central rail (114) and/or the said side rails (112, 113, 183, 184) assure the guiding and/or retention of a draw bar (231, 241, 251, 261, 35, 181), by a central part of the latter.

10. Fitting-out system according to any one of claims 1 to 9, **characterised in that** the said beam (11) comprises means for distribution and/or guiding of a flow of air.

11. Fitting-out system according to claim 10, **characterised in that** the said means for distribution and/or guiding of a flow of air are supplied by at least one opening (37) which is provided for this purpose in the said roof (38).

12. Fitting-out system according to any one of claims 1 to 11, **characterised in that** the said beam (11) comprises at least one cable duct which permits the actuation and/or electrical supply of at least one device which the said beam (11) bears.

13. Fitting-out system according to claim 12, **characterised in that** the said electrical supply supplies lighting means (124, 133) which are fitted in at least one of the elements belonging to the group comprising:
- the said beam (11);
- a shielding fabric (23, 24, 25, 26, 31, 32);
- a draw bar (231, 241, 251, 261, 35, 181);
- a rod (33, 34);
- a trimming element (131, 132).

14. Fitting-out system according to any one of claims 1 to 13, **characterised in that** the surface of the said beam (11) which is oriented towards the top of the said motor vehicle comprises at least one functional area.

15. Fitting-out system according to claim 14, **characterised in that** at least one of the said functional areas comprises:
- a surface for guiding and/or support of a shielding fabric (23, 24, 25, 26, 31, 32);
- a surface or a receptacle for guiding and/or support of a draw bar (231, 241, 251, 261, 35, 181) and/or at least one rod (33, 34);
- a receptacle for at least one actuating cable and/or at least one electric cable;
- an area for diffusion of light (124; 133);
- a receptacle for lighting means (512);
- a receptacle for means for diffusion of a flow of air (126, 127).

16. Fitting-out system according to any one of claims 1 to 15, **characterised in that** the said beam (11) comprises means for retention of at least one trimming element (131, 132) of the said roof (38).

17. Fitting-out system according to any one of claims 1 to 16, **characterised in that** the said central rail (114) assures the guiding and/or retention of at least one of the items of equipment belonging to the group comprising the:
- rear view mirrors (91);
- display screens (71, 72, 125);
- navigation system screens;
- DVD terminals;
- games consoles;
- storage boxes (123);
- direct and/or indirect lighting devices (124, 133);
- load retention and/or stoppages devices;
- air diffusion devices (126, 127).

18. Fitting-out system according to any one of claims 1 to 17, **characterised in that** the said central rail (114) bears at least one device which is mobile in sliding relative to the said rail (114) and in rotation relative to a substantially vertical axis.

19. Fitting-out system according to any one of claims 1 to 18, **characterised in that** at least the said central rail (114) comprises and/or co-operates with means for insertion and removal of a device which is designed to be retained and/or guided by the said central rail (114) .

20. Fitting-out system according to any one of claims 1 to 19, **characterised in that** the said beam (11) comprises at least one reinforcement element which is designed for at least one of the following functions:
- reinforcement of the structure of the said vehicle in the case of frontal impact;
- reinforcement of the structure of the said vehicle in the case of overturning;
- reinforcement and/or support of the roof (38) of the said vehicle.

21. Motor vehicle comprising a fitting-out system according to any one of claims 1 to 20.

## Patentansprüche

1. System zum Ausstatten eines Kraftfahrzeugs mit zentralem Längsträger (11) für Himmel (38), der sich im Inneren des Fahrzeugs erstreckt, wobei der Längsträger (11) mindestens drei parallele Schienen aufweist:
- zwei erste Seitenschienen (112, 113, 183, 184), die in eine Richtung im Wesentlichen parallel zu dem Himmel (38) zu beiden Seiten des Längsträgers (11) offen sind;
- eine dritte zentrale Schiene (114), die in eine Richtung im Wesentlichen senkrecht zu dem Himmel (38) zur Unterseite des Fahrzeugs offen ist,
**dadurch gekennzeichnet, dass** die ersten Seitenschienen (112, 113, 183, 184) jeweils das Führen mindestens eines Verdunkelungselements mindestens eines Teils der Fläche des Himmels (38) erlauben und jeweils mit einer seitlichen Schiene (12) zusammenwirken, die sich in der Nähe eines Rands des Himmels (38) derart erstreckt, dass wenigstens ein Sonnenblendenträger (13, 14) der Verdunkelungselemente geführt und/oder gehalten wird,
und dass der Blendenträger (13, 14) von der entsprechenden Seitenschiene (112, 113, 183, 184) getrennt werden kann und auf eine schwenkende Verbindung in der seitlichen Schiene (12) derart montiert ist, dass er sich im Wesentlichen parallel zu einer Seitenscheibe des Fahrzeugs platzieren kann.

2. Ausstattungssystem nach Anspruch 1, **dadurch gekennzeichnet, dass** die Verdunkelungselemente mindestens einen Verdunkelungsrollladen (163, 164) aufweisen, und dass die ersten Seitenschienen (112, 113, 183, 184) und die seitlichen Schienen (12) ebenfalls mindestens eine Zugstange (231, 241, 251, 261, 35, 181) und/oder mindestens eine Rippe (33, 34) und/oder mindestens ein Verdunkelungstuch (23, 24, 25, 26, 31, 32) des oder der Verdunkelungsrollläden (163, 164) führen und/oder halten.

3. Ausstattungssystem nach einem der Ansprüche 1 und 2, **dadurch gekennzeichnet, dass** der zentrale Längsträger (11) das Führen und das Halten einer Zugstange (231, 241, 251, 261, 35, 181) und/oder mindestens einer Rippe (33, 34) durch eine Aufhängzone sicherstellt, die sich in der Mitte der Zugstange (231, 241, 251, 261, 35, 181) oder der Rippe oder Rippen (33, 34) erstreckt.

4. Ausstattungssystem nach Anspruch 3, **dadurch gekennzeichnet, dass** die Aufhängzone zwei Stützabschnitte aufweist, die jeweils mit den Seitenschienen (112, 113, 183, 184) zusammenwirken.

5. Ausstattungssystem nach einem der Ansprüche 1 bis 4, **dadurch gekennzeichnet, dass** der Längsträger (11) wenigstens eine Rippe (33, 34) zum Halten eines Verdunkelungstuchs (23, 24, 25, 26, 31, 32) trägt.

6. Ausstattungssystem nach Anspruch 5, **dadurch gekennzeichnet, dass** jede der Rippen (33, 34) in Bezug zu dem Längsträger (11) angelenkt und zwischen zwei Positionen beweglich ist:
- eine Ruheposition, in der sie sich im Wesentlichen parallel zu dem Längsträger (11) erstreckt;
- eine Tuchhalteposition, in der sie sich im Wesentlichen senkrecht zu dem Längsträger (11) erstreckt.

7. Ausstattungssystem nach einem der Ansprüche 1 bis 6, **dadurch gekennzeichnet, dass** der Längsbalken (11) einen Raum mit dem Himmel (38) aufweist, der das Durchgehen und das Halten eines Verdunkelungstuchs (23, 24, 25, 26, 31, 32) erlaubt, das sich im Wesentlichen auf der Breite des Himmels (38) erstreckt.

8. Ausstattungssystem nach einem der Ansprüche 1 bis 7, **dadurch gekennzeichnet, dass** die zentrale Schiene (114) mit einem Verdunkelungstuch (23, 24, 25, 26, 31, 32), das mindestens ein Halte- und/oder Führungselement trägt, das von den seitlichen Rändern des Tuchs (23, 24, 25, 26, 31, 32) entfernt ist und sich parallel zu der Aufbreitachse erstreckt, zusammenwirkt,
wobei der Querschnitt der zentralen Schiene (114) zu dem des Halteund/oder Führungselements komplementär ist.

9. Ausstattungssystem nach einem der Ansprüche 1 bis 8, **dadurch gekennzeichnet, dass** die zentrale Schiene (114) und/oder die Seitenschienen (112, 113, 183, 184) das Führen und/oder das Halten einer Zugstange (231, 241, 251 , 261 , 35, 181) über einen zentralen Teil dieser Letzteren sicherstellt/sicherstellen.

10. Ausstattungssystem nach einem der Ansprüche 1 bis 9, **dadurch gekennzeichnet, dass** der Längsträger (11) Mittel zum Verteilen und/oder Führen eines Luftstroms aufweist.

11. Ausstattungssystem nach Anspruch 10, **dadurch gekennzeichnet, dass** die Mittel zum Verteilen und/oder zum Führen eines Luftstroms von mindestens einer Öffnung (37), die dazu in dem Himmel (38) vorgesehen ist, versorgt werden.

12. Ausstattungssystem nach einem der Ansprüche 1 bis 11, **dadurch gekennzeichnet, dass** der Längsträger (11) mindestens eine Kabeldurchführung aufweist, die das Betätigen und/oder das Versorgen mit Strom mindestens einer von dem Längsträger (11) getragenen Vorrichtung erlaubt.

13. Ausstattungssystem nach Anspruch 12, **dadurch gekennzeichnet, dass** die Stromversorgung Beleuchtungsmittel (124, 133) versorgt, die in mindestens eines der Elemente montiert sind, die zu der Gruppe gehören, die Folgende umfasst:
- den Längsträger (11);
- ein Verdunkelungstuch (23, 24, 25, 26, 31, 32);
- eine Zugstange (231, 241, 251, 261, 35, 181);
- eine Rippe (33, 34);
- ein Verkleidungselement (131, 132).

14. Ausstattungssystem nach einem der Ansprüche 1 bis 13, **dadurch gekennzeichnet, dass** die Seite des Längsträgers (11), die zur Oberseite des Kraftfahrzeugs gerichtet ist, mindestens einen funktionalen Bereich aufweist.

15. Ausstattungssystem nach Anspruch 14, **dadurch gekennzeichnet, dass** mindestens einer der funktionalen Bereiche Folgendes aufweist:
- eine Führungsfläche und/oder Stützfläche eines Verdunkelungstuchs (23, 24, 25, 26, 31, 32);
- eine Fläche oder eine Aufnahme zum Führen und/oder zum Stützen eine Zugstange (231, 241, 251, 261, 35, 181) und/oder mindestens einer Rippe (33, 34);
- eine Aufnahme mindestens eines Betätigungskabels und/oder mindestens eines Stromkabels;
- einen Lichtverbreitungsbereich (124, 133);
- eine Aufnahme von Beleuchtungsmitteln (512);
- eine Aufnahme von Verbreitungsmitteln eines Luftstroms (126, 127).

16. Ausstattungssystem nach einem der Ansprüche 1 bis 15, **dadurch gekennzeichnet, dass** der Längsträger (11) Mittel zum Halten mindestens eines Verkleidungselements (131, 132) des Himmels (38) aufweist.

17. Ausstattungssystem nach einem der Ansprüche 1 bis 16, **dadurch gekennzeichnet, dass** die zentrale Schiene (114) das Führen und/oder das Halten mindestens einer der Ausstattungen sicherstellt, die zur folgenden Gruppe gehören:
- die Rückspiegel (91);
- die Anzeigedisplays (71, 72, 125);
- die Displays von Navigationssysteme;
- die DVD-Terminals,
- die Spielkonsolen;
- Verstauboxen (123);
- Vorrichtungen für die direkte und/oder indirekte Beleuchtung (124, 133);
- Vorrichtungen zum Halten und/oder Stoppen von Last;
- Luftverbreitungsvorrichtungen (126, 127).

18. Ausstattungssystem nach einem der Ansprüche 1 bis 17, **dadurch gekennzeichnet, dass** die zentrale Schiene (114) mindestens eine in Bezug zu der Schiene (114) gleitend bewegliche und in Bezug zu einer im Wesentlichen vertikalen Achse drehende Vorrichtung aufweist.

19. Ausstattungssystem nach einem der Ansprüche 1 bis 18, **dadurch gekennzeichnet, dass** mindestens die zentrale Schiene (114) Mittel zum Einfügen und Entfernen einer Vorrichtung, die dazu bestimmt ist, von der zentralen Schiene (114) gehalten und/oder geführt zu werden, aufweist oder mit diesen zusammenarbeitet.

20. Ausstattungssystem nach einem der Ansprüche 1 bis 19, **dadurch gekennzeichnet, dass** der Längsträger (11) mindestens ein Verstärkungselement aufweist, das für mindestens eine der folgenden Funktionen bestimmt ist:
- Verstärken der Struktur des Fahrzeugs bei einem Frontalzusammenstoß;
- Verstärken der Struktur des Fahrzeugs bei einem Überschlagen;
- Verstärken und/oder Stützen des Himmels (38) des Fahrzeugs.

21. Kraftfahrzeug, das ein Ausstattungssystem nach einem der Ansprüche 1 bis 20 aufweist.
